# EUROPÄISCHE PATENTSCHRIFT

(11) **EP 3 453 156 B1**
(45) Veröffentlichungstag und Bekanntmachung des Hinweises auf die Patenterteilung: **27.01.2021**
(21) Anmeldenummer: 17720004.5
(22) Anmeldetag: 10.04.2017
(51) Int. Cl.: H04L 29/12, H04L 29/08

(54) **VERFAHREN ZUR ZUORDNUNG VON ADRESSEN AN BUSTEILNEHMER EINES BUSSYSTEMS UND BUSSYSTEM**
METHOD FOR ASSIGNING ADDRESSES TO BUS SUBSCRIBERS OF A BUS SYSTEM, AND BUS SYSTEM
PROCÉDÉ D'ATTRIBUTION D'ADRESSES AUX ABONNÉS DU BUS D'UN SYSTÈME DE BUS ET SYSTÈME DE BUS ASSOCIÉ

(30) Priorität: 02.05.2016 DE 102016005311
(43) Veröffentlichungstag der Anmeldung: 13.03.2019
(73) Patentinhaber: SEW-EURODRIVE GmbH & Co. KG, 76646 Bruchsal (DE)
(72) Erfinder: FUCHS, Manuel, 76709 Kronau (DE); KOLLAR, Hans Jürgen, 76646 Bruchsal (DE)
(86) Internationale Anmeldenummer: PCT/EP2017/025084
(87) Internationale Veröffentlichungsnummer: WO 2017/190845

(56) Entgegenhaltungen:
- WO-A1-2009/027802
- DE-A1- 10 038 783
- US-A1- 2014 052 863

## Beschreibung

Die Erfindung betrifft ein Verfahren zur Zuordnung von Adressen an Busteilnehmer eines Bussystems und ein Bussystem.

Aus der DE 10 2005 056 294 A1 ist ein Verfahren zum Zuordnen von Adressen an Busteilnehmer eines Bussystems und eine Anlage bekannt.

Aus der WO 2009/027802 A1 ist ebenfalls ein verfahren zum Zuordnen von Adressen an Busteilnehmer bekannt, bei dem jeder Busteilnehmer seine Adresse aus einem Taktsignal oder aus einer Adresse seines Busvorgängers ableitet.

Die DE 100 38 783 A1 beschreibt ein Verfahren zur automatischen Zuordnung von Adressen an Busteilnehmer, bei denen immer nur ein Busteilnehmer ein Anmeldungskommando empfängt und ausführt und erst bei erfolgter Anmeldung an den nachfolgenden Busteilnehmer weiterleitet.

Eine ähnliche Vorgehensweise ist auch aus der DE 197 56 564 A1 bekannt.

Der Erfindung liegt daher die Aufgabe zugrunde, ein Verfahren zur Zuordnung von Adressen an Busteilnehmer eines Bussystems und ein Bussystem weiterzubilden, wobei die Sicherheit verbessert werden soll.

Erfindungsgemäß wird die Aufgabe bei dem Verfahren zur Zuordnung von Adressen an Busteilnehmer eines Bussystems nach den in Anspruch 1 und bei dem Bussystem nach den in Anspruch 4 angegebenen Merkmalen gelöst.

Die Erfindung wird nun anhand von Abbildungen näher erläutert:

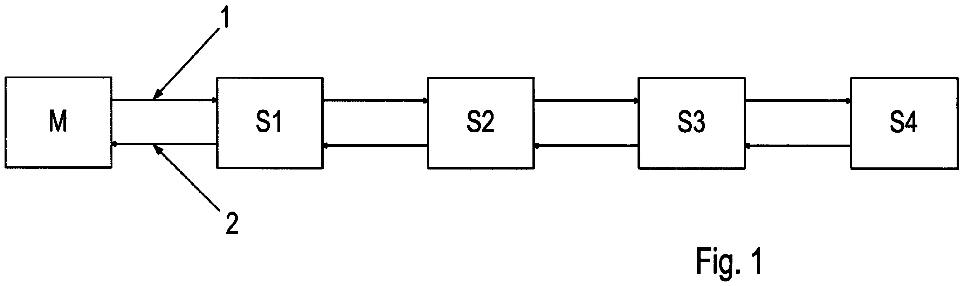

In der Figur 1 ist ein erfindungsgemäßes Bussystem schematisch dargestellt.
Figur 2 zeigt den zeitlichen Verlauf von Datenpaketen (3, 4) auf einem Datenbus.
Figur 3 zeigt den zeitlichen Verlauf von Datenpaketen (3, 4) und einem Notsignal auf dem Datenbus in einem ersten Fallbeispiel.
Figur 4 zeigt den zeitlichen Verlauf von Datenpaketen (3, 4) und einem Notsignal auf dem Datenbus in einem zweiten Fallbeispiel.

Das erfindungsgemäße Bussystem weist ein Mastermodul M und Busteilnehmer (S1, S2, S3, S4) auf, die seriell angeordnet und miteinander verbunden sind. Dabei weist das Bussystem einen dem Mastermodul M nachgeordneten ersten Busteilnehmer S1 auf. Das Bussystem weist einen dem ersten Busteilnehmer S1 nachgeordneten zweiten Busteilnehmer S2 auf, wobei der erste Busteilnehmer S1 dem zweiten Busteilnehmer S2 vorgeordnet ist. Der zweite Busteilnehmer S2 ist einem dritten Busteilnehmer S3 vorgeordnet und der dritte Busteilnehmer S3 ist dem zweiten Busteilnehmer S2 nachgeordnet. Der dritte Busteilnehmer S3 ist einem vierten Busteilnehmer S4 vorgeordnet und der vierte Busteilnehmer S4 ist dem dritten Busteilnehmer S3 nachgeordnet.

Dabei ist ein einem anderen Busteilnehmer (S1, S2, S3, S4) nachgeordneter Busteilnehmer (S1, S2, S3, S4) in Richtung der seriellen Anordnung weiter von dem Mastermodul M entfernt als der andere Busteilnehmer (S1, S2, S3, S4). Der andere Busteilnehmer (S1, S2, S3, S4), der in Richtung der seriellen Anordnung weniger weit von dem Mastermodul M entfernt ist als der Busteilnehmer (S1, S2, S3, S4), ist dem Busteilnehmer (S1, S2, S3, S4) vorgeordnet.

Das Bussystem ist beispielsweise eine industrielle Anlage, die verschiedene Geräte, beispielsweise Antriebe oder Elektronikbaugruppen, wie Antriebsumrichter für Elektromotoren, als Busteilnehmer (S1, S2, S3, S4) aufweist.

Der Datenbus weist eine erste Datenleitung 1 und eine zweite Datenleitung 2 auf, die jeweils die Busteilnehmer (S1, S2, S3, S4) und das Mastermodul M seriell miteinander verbinden.

Mittels der ersten Datenleitung 1 sendet das Mastermodul M Datenpakete (3, 4) an die Busteilnehmer (S1, S2, S3, S4), beispielsweise Steuerbefehle. Mittels der zweiten Datenleitung 2 senden die Busteilnehmer (S1, S2, S3, S4) Datenpakete (3, 4) an das Mastermodul M, beispielsweise Statusinformationen.

Jeder Busteilnehmer (S1, S2, S3, S4) weist eine erste Schnittstelle und eine zweite Schnittstelle auf, die vorzugsweise jeweils als Steckverbinderteil ausgeführt sind. Jede Datenleitung (1, 2) weist zumindest ein Datenkabel auf. Jedes Datenkabel weist ein erstes Gegensteckverbinderteil und zumindest ein zweites Gegensteckverbinderteil auf zur Datenübertragung zwischen den Busteilnehmern (S1, S2, S3, S4) entlang der jeweiligen Datenleitung (1, 2).

Somit ist jeder Busteilnehmer (S1, S2, S3, S4) mittels eines ersten Steckverbinderteils und des jeweiligen Datenkabels mit einem zweiten Steckverbinderteil eines vorgeordneten Busteilnehmers (S1, S2, S3, S4) verbindbar und mittels eines zweiten Steckverbinderteils und des jeweiligen Datenkabels mit einem ersten Steckverbinderteil eines nachgeordneten Busteilnehmers (S1, S2, S3, S4) verbindbar.

Vorzugsweise sind das jeweilige Datenkabel der ersten Datenleitung 1 und das jeweilige Datenkabel der zweiten Datenleitung 2 in einer gemeinsamen Kabelummantelung geführt angeordnet. Vorzugsweise ist in dieser Kabelummantelung auch eine Versorgungsleitung und/oder eine Masseleitung für die Busteilnehmer (S1, S2, S3, S4) angeordnet.

Jeder Busteilnehmer (S1, S2, S3, S4) weist einen Schalter, insbesondere eine elektronische Schaltung, auf, der mit der jeweiligen Datenleitung (1, 2) verbunden ist. Mittels des Schalters ist die Datenübertragung entlang der jeweiligen Datenleitung (1, 2) unterbrechbar.

Jeder Busteilnehmer (S1, S2, S3, S4) weist ein Zeitmessmittel, insbesondere Timer, auf. Vorzugsweise ist das Zeitmessmittel in der elektronischen Schaltung des Busteilnehmers (S1, S2, S3, S4) integriert ausgeführt.

Mittels der elektronischen Schaltung ist also die Datenübertragung entlang der jeweiligen Datenleitung (1, 2) nach Ablauf einer vorgegebenen Zeit unterbrechbar.

Jeder Busteilnehmer (S1, S2, S3, S4) weist eine Logikschaltung auf. Vorzugsweise ist die Logikschaltung in der elektronischen Schaltung des Busteilnehmers (S1, S2, S3, S4) integriert ausgeführt.

Mittels der Logikschaltung sind Datenpakete (3, 4) auf dem Datenbus auswertbar, insbesondere ist der Absender eines Datenpaketes (3, 4) erkennbar.

Sollte ein Busteilnehmer (S1, S2, S3, S4) inaktiv sein, so wird ein Datenpaket (3, 4) ununterbrochen und ohne zeitliche Verzögerung durch den inaktiven Busteilnehmer (S1, S2, S3, S4) hindurch zum nachgeordneten oder vorgeordneten Busteilnehmer (S1, S2, S3, S4) weitergeleitet. Ein Datenpaket (3, 4) passiert einen inaktiven Busteilnehmer (S1, S2, S3, S4) ungehindert.

Vorzugsweise ist der Datenbus digital ausgeführt.

Zur Initialisierung des Bussystems sendet das Mastermodul M eine Aufforderung an die ihm nachgeordneten Busteilnehmer (S1, S2, S3, S4) sich beim Mastermodul M anzumelden. Ein dem Mastermodul M nachgeordneter aktiver Busteilnehmer (S1, S2, S3, S4) meldet sich beim Mastermodul M an und leitet die Aufforderung zur Anmeldung beim Mastermodul M an die ihm nachgeordneten Busteilnehmer (S1, S2, S3, S4) weiter. Daraufhin wartet der angemeldete Busteilnehmer (S1, S2, S3, S4) eine vorgegebene Zeitspanne ab, ob sich ein ihm nachgeordneter Busteilnehmer (S1, S2, S3, S4) beim Mastermodul M anmeldet.

Falls sich kein nachgeordneter Busteilnehmer (S1, S2, S3, S4) beim Mastermodul anmeldet, schließt der letzte angemeldete Busteilnehmer (S1, S2, S3, S4), sobald die vorgegebene Zeitspanne abgelaufen ist, das Bussystem, indem er die erste Datenleitung 1 und die zweite Datenleitung 2 miteinander verbindet, insbesondere kurzschließt. Somit wird ein Datenpaket (3, 4), das mittels der ersten Datenleitung 1 vom Mastermodul M an die Busteilnehmer (S1, S2, S3, S4) gesendet wird, an dem letzten Busteilnehmer (S1, S2, S3, S4) in die zweite Datenleitung 2 weitergeleitet und zurück zum Mastermodul geleitet.

Der letzte Busteilnehmer (S1, S2, S3, S4) ist derjenige Busteilnehmer (S1, S2, S3, S4), der sich zuletzt beim Mastermodul M anmeldet und keine aktiven nachgeordneten Busteilnehmer (S1, S2, S3, S4) aufweist.

Durch einen inaktiven Busteilnehmer (S1, S2, S3, S4) wird die Aufforderung zur Anmeldung beim Mastermodul M hindurchgeleitet, ohne dass dieser sich selbst beim Mastermodul M anmeldet.

Nachdem das Bussystem geschlossen ist, wird eine Freigabe durch eine übergeordnete Steuerung oder einen Bediener erteilt und der Betrieb des Bussystems aufgenommen.

Sollte ein Busteilnehmer (S1, S2, S3, S4) sich verspätet anmelden wollen, also nachdem die vorgegebene Zeitspanne nach der Anmeldung des letzten Busteilnehmers (S1, S2, S3, S4) abgelaufen ist, so sendet dieser Busteilnehmer (S1, S2, S3, S4) ein Datenpaket (3, 4) an das Mastermodul M. Falls bereits eine Freigabe erteilt wurde, wird dieses Datenpaket (3, 4) von einem vorgeordneten Busteilnehmer (S1, S2, S3, S4), der beim Mastermodul M angemeldet ist, gestoppt und nicht zum Mastermodul M weitergeleitet.

Sobald die Freigabe widerrufen wird, wird ein Datenpaket (3, 4) des verspäteten Busteilnehmers (S1, S2, S3, S4) an das Mastermodul M weitergeleitet und der verspätete Busteilnehmer (S1, S2, S3, S4) wird in das Bussystem aufgenommen.

Sollte der verspätete Busteilnehmer (S1, S2, S3, S4) keine nachgeordneten Busteilnehmer (S1, S2, S3, S4) aufweisen, die beim Mastermodul M angemeldet sind, so wird dieser der neue letzte Busteilnehmer (S1, S2, S3, S4) und schließt das Bussystem, nachdem er die vorgegebene Zeitspanne zur Anmeldung eines Busteilnehmers (S1, S2, S3, S4) abgewartet hat.

Die vorgegebene Zeitspanne zur Anmeldung eines Busteilnehmers (S1, S2, S3, S4) ist an die Busteilnehmer (S1, S2, S3, S4) anpassbar. Dabei ist die Zeitspanne derart wählbar, dass Busteilnehmer (S1, S2, S3, S4), die eine längere Inbetriebnahmezeit aufweisen, sicher beim Mastermodul M angemeldet werden.

Bei der Initialisierung des Bussystems werden automatisch Busadressen für die Busteilnehmer (S1, S2, S3, S4) vergeben. Dazu sendet das Mastermodul M die Busadresse "1" an den ersten Busteilnehmer S1. Der erste Busteilnehmer S1 meldet sich mit dieser Busadresse beim Mastermodul M an und inkrementiert die Busadresse um 1 und leitet sie an den ihm nachgeordneten Busteilnehmer (S2, S3, S4) weiter. Der nachgeordnete Busteilnehmer (S1, S2, S3, S4) meldet sich mit der inkrementierten Busadresse beim Mastermodul M an, hier also die Busadresse "2", inkrementiert diese Busadresse wiederum um 1 und leitet sie an den ihm nachgeordneten Busteilnehmer (S2, S3, S4) weiter.

Zur Begrenzung der Anzahl der Busteilnehmer (S1, S2, S3, S4) im Bussystem wird ein Busteilnehmer (S1, S2, S3, S4), der eine Busadresse erhält, die größer als die maximal erlaubte Anzahl von Busteilnehmern (S1, S2, S3, S4) ist, diese Busadresse nicht weiter inkrementieren, sondern leitet die gleiche Busadresse an den ihm nachgeordneten Busteilnehmer (S1, S2, S3, S4) weiter, der sich mit dieser Busadresse beim Mastermodul M anmeldet. Sobald das Mastermodul M eine Busadresse erhält, die größer als die maximal erlaubte Anzahl von Busteilnehmern (S1, S2, S3, S4) ist, bricht das Mastermodul M die Initialisierung des Bussystems ab und sendet eine Fehlermeldung an eine dem Mastermodul M übergeordnete Steuerung.

Sollte ein Busteilnehmer (S1, S2, S3, S4), der noch nicht aktiv ist, also ein inaktiver Busteilnehmer (S1, S2, S3, S4) eine Busadresse von einem ihm vorgeordneten Busteilnehmer (S1, S2, S3, S4) oder dem Mastermodul M erhalten, so wird diese Busadresse durch den inaktiven Busteilnehmer (S1, S2, S3, S4) hindurchgeschleift ohne inkrementiert zu werden und an einen nachgeordneten Busteilnehmer (S1, S2, S3, S4) vergeben.

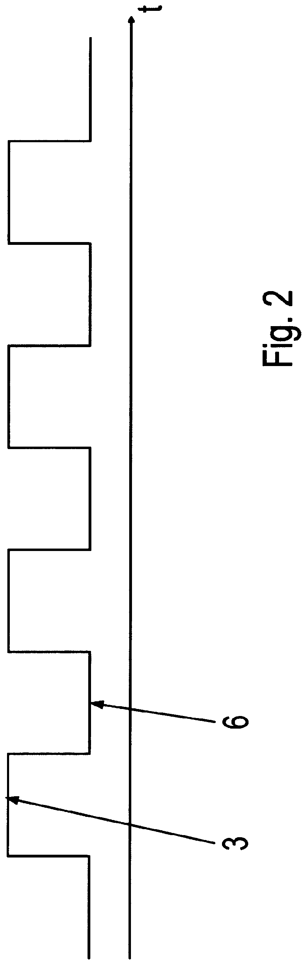

Die Figuren 2 bis 4 zeigen den zeitlichen Verlauf von Datenpaketen 3, die mittels einer jeweiligen Datenleitung (1, 2) übertragen werden. Jedes Datenpaket 3 hat eine vorgegebene Länge, die von der Anzahl der Busteilnehmer (S1, S2, S3, S4) des Bussystems abhängig ist.

Zwischen zwei zeitlich aufeinander folgenden Datenpaketen 3 wird die Datenübertragung für einen vorgegebenen Zeitraum unterbrochen, so dass zwei zeitlich aufeinander folgende Datenpakete 3 zeitlich voneinander beabstandet sind mittels einer Sendepause 6.

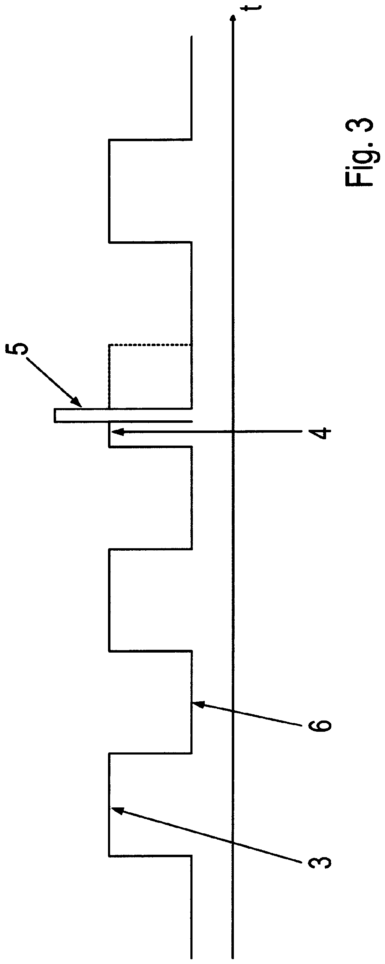

Sobald ein Busteilnehmer (S1, S2, S3, S4) oder das Mastermodul M einen Fehler feststellt, wird das zu dem Zeitpunkt gesendete Datenpaket 4 sofort unterbrochen und ein Notsignal 5 von dem jeweiligen Busteilnehmer (S1, S2, S3, S4) oder dem Mastermodul M gesendet, wie in Figur 3 dargestellt. Dieses Notsignal 5 bewirkt eine sofortige Abschaltung aller Busteilnehmer (S1, S2, S3, S4).

Das unterbrochene Datenpaket 4 wird sofort beendet und von den Busteilnehmern (S1, S2, S3, S4) nicht weiter verarbeitet.

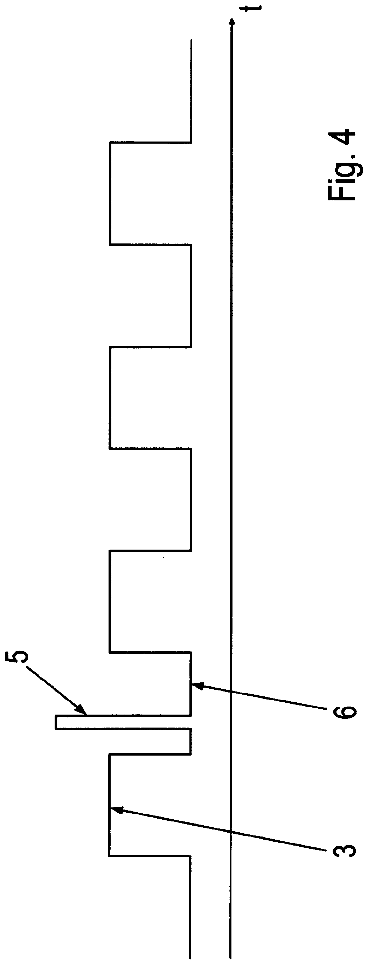

Stellt ein Busteilnehmer (S1, S2, S3, S4) oder das Mastermodul M während einer Sendepause 6 einen Fehler fest, so wird die Sendepause 6 unterbrochen und ein Notsignal 5 von dem jeweiligen Busteilnehmer (S1, S2, S3, S4) oder dem Mastermodul M gesendet, wie in Figur 4 dargestellt. Dieses Notsignal 5 bewirkt eine sofortige Abschaltung aller Busteilnehmer (S1, S2, S3, S4).

Das jeweilige Notsignal 5 wird von dem jeweiligen Busteilnehmer (S1, S2, S3, S4) auf beiden Datenleitungen (1, 2) gesendet. Das Notsignal 5 wird also vom jeweiligen Busteilnehmer (S1, S2, S3, S4) zum Mastermodul M hin auf der zweiten Datenleitung gesendet und vom jeweiligen Busteilnehmer (S1, S2, S3, S4) vom Mastermodul M weg auf der ersten Datenleitung 1 gesendet.

Das jeweilige Notsignal 5 wird von den Busteilnehmern (S1, S2, S3, S4) sofort verarbeitet und gleichzeitig an den nachgeordneten Busteilnehmer (S1, S2, S3, S4) weitergeleitet, so dass die Busteilnehmer (S1, S2, S3, S4) sofort abschalten. Das Notsignal 5 wird also nicht zuerst gespeichert und verarbeitet, sondern sofort an alle Busteilnehmer (S1, S2, S3, S4) und das Mastermodul M weitergeleitet.

Vorzugsweise weist das Notsignal 5 eine zeitlich kürzere Länge, insbesondere Signallänge, auf als die Datenpakete (3, 4) und/oder die Sendepause 6.

### Bezugszeichenliste

- M: Mastermodul
- S1: erster Busteilnehmer
- S2: zweiter Busteilnehmer
- S3: dritter Busteilnehmer
- S4: vierter Busteilnehmer
- 1: erste Datenleitung
- 2: zweite Datenleitung
- 3: Datenpaket
- 4: Datenpaket
- 5: Notsignal
- 6: Sendepause

## Patentansprüche

1. Verfahren zur Zuordnung von Adressen an Busteilnehmer eines Bussystems, aufweisend ein Mastermodul (M) und seriell angeordnete Busteilnehmer (S1, S2, S3, S4),
wobei das Mastermodul (M) und die Busteilnehmer (S1, S2, S3, S4) seriell angeordnet und miteinander verbunden sind,
wobei das Verfahren die zeitlich aufeinander folgenden Verfahrensschritte aufweist:
wobei in einem ersten Verfahrensschritt das Mastermodul (M) einem dem Mastermodul (M) nachgeordneten ersten Busteilnehmer (S1) eine erste Adresse zuordnet und diese erste Adresse an den ersten Busteilnehmer (S1) sendet, insbesondere wobei die erste Adresse eine natürliche Zahl n ist, insbesondere wobei die erste Adresse 0 oder 1 ist,
wobei in einem zweiten Verfahrensschritt der erste Busteilnehmer (S1) die erste Adresse um eins inkrementiert und einem dem ersten Busteilnehmer (S1) nachgeordneten zweiten Busteilnehmer (S2) als zweite Adresse zuordnet und diese zweite Adresse an den zweiten Busteilnehmer (S2) sendet, insbesondere wobei die zweite Adresse die natürliche Zahl (n+1) ist,
wobei in einem dritten Verfahrensschritt der zweite Busteilnehmer (S2) sich mit seiner zweiten Adresse bei dem Mastermodul (M) anmeldet, und **dadurch gekennzeichnet, dass** ein Busteilnehmer (S1, S2, S3, S4), der eine Adresse erhält, die größer als eine maximal erlaubte Anzahl von Busteilnehmern (S1, S2, S3, S4) ist, diese Adresse nicht weiter inkrementiert, sondern die gleiche Adresse an den ihm nachgeordneten Busteilnehmer (S1, S2, S3, S4) weiterleitet, der sich mit dieser Adresse beim Mastermodul (M) anmeldet, und das Mastermodul (M) eine Fehlermeldung an eine dem Mastermodul (M) übergeordnete Steuerung sendet, sobald das Mastermodul (M) eine Adresse erhält, die größer als die maximal erlaubte Anzahl von Busteilnehmern (S1, S2, S3, S4) ist.

2. Verfahren nach Anspruch 1, wobei in einem vierten Verfahrensschritt der zweite Busteilnehmer (S2) die zweite Adresse um eins inkrementiert und einem dem zweiten Busteilnehmer (S2) nachgeordneten dritten Busteilnehmer (S3) als dritte Adresse zuordnet und diese dritte Adresse an den dritten Busteilnehmer (S3) sendet, insbesondere wobei die dritte Adresse die natürliche Zahl (n+2) ist,
wobei in einem fünften Verfahrensschritt der dritte Busteilnehmer (S3) sich mit seiner dritten Adresse bei dem Mastermodul (M) anmeldet.

3. Verfahren nach mindestens einem der vorangegangenen Ansprüche, wobei eine Freigabe durch eine dem Mastermodul (M) übergeordnete Steuerung erteilt und/oder widerrufen wird.

4. Bussystem aufweisend ein Mastermodul (M) und Busteilnehmer (S1, S2, S3, S4), wobei den Busteilnehmern Adressen mittels eines Verfahrens nach mindestens einem der Ansprüche 1 bis 3 zuordenbar sind, wobei das Mastermodul (M) und die Busteilnehmer (S1, S2, S3, S4) seriell angeordnet sind, wobei das Mastermodul (M) und die Busteilnehmer (S1, S2, S3, S4) mittels zumindest einer Datenleitung (1, 2) miteinander verbunden sind.

5. Bussystem nach Anspruch 4, wobei das Bussystem zumindest eine erste Datenleitung (1) und eine zweite Datenleitung (2) aufweist.

6. Bussystem nach Anspruch 5, wobei mittels der ersten Datenleitung (1) ein Datenpaket (3) vom Mastermodul (M) an die Busteilnehmer (S1, S2, S3, S4) sendbar ist,
und/oder dass mittels der zweiten Datenleitung (2) ein jeweiliges Datenpaket (3) von einem jeweiligen Busteilnehmer (S1, S2, S3, S4) an das Mastermodul (M) sendbar ist.

7. Bussystem nach mindestens einem der Ansprüche 5 bis 6, wobei die jeweilige Datenleitung (1, 2) zumindest ein jeweiliges Datenkabel aufweist, wobei jeder Busteilnehmer (S1, S2, S3, S4) mittels eines jeweiligen Datenkabels mit dem ihm vorgeordneten beziehungsweise nachgeordneten Busteilnehmer (S1, S2, S3, S4) oder dem Mastermodul (M) verbunden ist,
insbesondere wobei jedes Datenkabel zwei Gegensteckverbinderteile aufweist und wobei jeder Busteilnehmer (S1, S2, S3, S4) ein erstes Steckverbinderteil zur Verbindung mit dem jeweiligen vorgeordneten Busteilnehmer mittels eines jeweiligen Datenkabels aufweist und wobei jeder Busteilnehmer (S1, S2, S3, S4) ein zweites Steckverbinderteil zur Verbindung mit dem jeweiligen nachgeordneten Busteilnehmer aufweist.

8. Bussystem nach Anspruch 7, wobei
das jeweilige Datenkabel der ersten Datenleitung (1) und das jeweilige Datenkabel der zweiten Datenleitung (2) zwischen zwei benachbarten Busteilnehmern (S1, S2, S3, S4) in einer Kabelummantelung angeordnet sind, insbesondere wobei die Kabelummantelung die Datenkabel in Umfangsrichtung umgibt, insbesondere einhüllt, insbesondere wobei eine Versorgungsleitung und/oder eine Masseleitung für die Busteilnehmer (S1, S2, S3, S4) in der Kabelummantelung angeordnet ist.

9. Bussystem nach mindestens einem der Ansprüche 5 bis 8, wobei
jeder Busteilnehmer (S1, S2, S3, S4) einen Schalter aufweist, wobei der Schalter mit einer jeweiligen Datenleitung (1, 2) verbunden ist,
wobei der Schalter eingerichtet ist, die Datenübertragung entlang der jeweiligen Datenleitung (1, 2) zu unterbrechen,
und/oder wobei
jeder Busteilnehmer (S1, S2, S3, S4) ein Zeitmessmittel aufweist,
und/oder wobei
jeder Busteilnehmer (S1, S2, S3, S4) eine Logikschaltung aufweist, insbesondere wobei mittels der Logikschaltung Datenpakete des Mastermoduls (M) und/oder der Busteilnehmer (S1, S2, S3, S4) auswertbar sind,
und/oder wobei
jeder Busteilnehmer (S1, S2, S3, S4) eine elektronische Schaltung aufweist, wobei die elektronische Schaltung den Schalter und/oder das Zeitmessmittel und/oder die Logikschaltung aufweist, insbesondere wobei der Schalter und/oder das Zeitmessmittel und/oder die Logikschaltung in die elektronische Schaltung integriert sind.

## Claims

1. Method for assigning addresses to bus subscribers of a bus system, which comprises a master module (M) and bus subscribers (S1, S2, S3, S4) arranged in series, the master module (M) and the bus subscribers (S1, S2, S3, S4) being arranged and interconnected in series,
the method having the following consecutive method steps:
the master module (M), in a first method step, allocating a first address to a first bus subscriber (S1) arranged downstream of the master module (M) and sending said first address to the first bus subscriber (S1), the first address in particular being a natural number n, the first address in particular being 0 or 1,
the first bus subscriber (S1), in a second method step, increasing the first address by one and assigning it, as a second address, to a second bus subscriber (S2) arranged downstream of the first bus subscriber (S1) and sending said second address to the second bus subscriber (S2), the second address in particular being the natural number (n+1),
the second bus subscriber (S2), in a third method step, logging into the master module (M) using its second address, and
**characterised in that**
any bus subscriber (S1, S2, S3, S4) that receives an address that is higher than the maximum permitted number of bus subscribers (S1, S2, S3, S4) does not increase this address any further, but rather forwards the same address to the bus subscriber (S1, S2, S3, S4) arranged downstream of it, which logs into the master module (M) using that address, and
as soon as the master module (M) receives an address that is higher than the maximum permitted number of bus subscribers (S1, S2, S3, S4), the master module (M) sends an error message to a controller superordinate to the master module (M).

2. Method according to claim 1,
wherein the second bus subscriber (S2), in a fourth method step, increases the second address by one and assigns it, as a third address, to a third bus subscriber (S3) arranged downstream of the second bus subscriber (S2) and sends said third address to the third bus subscriber (S3), in particular wherein the third address is the natural number (n+2), wherein the third bus subscriber (S3), in a fifth method step, logs into the master module (M) using its third address.

3. Method according to at least one of the preceding claims,
wherein an approval is granted and/or revoked by a controller superordinate to the master module (M).

4. Bus system comprising a master module (M) and bus subscribers (S1, S2, S3, S4), wherein addresses can be assigned to the bus subscribers by means of a method according to at least one of claims 1 to 3,
wherein the master module (M) and the bus subscribers (S1, S2, S3, S4) are arranged in series,
wherein the master module (M) and the bus subscribers (S1, S2, S3, S4) are interconnected by means of at least one data line (1, 2).

5. Bus system according to claim 4,
wherein the bus system comprises at least a first data line (1) and a second data line (2).

6. Bus system according to claim 5,
wherein a data packet (3) can be sent from the master module (M) to the bus subscribers (S1, S2, S3, S4) by means of the first data line (1),
and/or
a respective data packet (3) can be sent from a particular bus subscriber (S1, S2, S3, S4) to the master module (M) by means of the second data line (2).

7. Bus system according to at least one of claims 5 to 6,
wherein each data line (1, 2) comprises at least one data cable, wherein each bus subscriber (S1, S2, S3, S4) is connected to the bus subscriber (S1, S2, S3, S4) arranged upstream or downstream thereof or to the master module (M) by means of a respective data cable,
in particular wherein each data cable comprises two mating plug-in connector parts and wherein each bus subscriber (S1, S2, S3, S4) comprises a first plug-in connector part for connecting to the particular bus subscriber arranged upstream thereof by means of a respective data cable and wherein each bus subscriber (S1, S2, S3, S4) comprises a second plug-in connector part for connecting to the particular bus subscriber connected downstream thereof.

8. Bus system according to claim 7,
wherein the respective data cable of the first data line (1) and the respective data cable of the second data line (2) between two adjacent bus subscribers (S1, S2, S3, S4) are arranged in a cable sheath, in particular wherein the cable sheath encloses, in particular encases, the data cables in the circumferential direction,
in particular wherein a supply line and/or an earth line for the bus subscribers (S1, S2, S3, S4) is arranged in the cable sheath.

9. Bus system according to at least one of claims 5 to 8,
wherein each bus subscriber (S1, S2, S3, S4) comprises a switch, wherein the switch is connected to a particular data cable (1, 2),
wherein the switch is configured to interrupt the data transmission along the particular data cable (1, 2),
and/or wherein
each bus subscriber (S1, S2, S3, S4) comprises a time-measuring means,
and/or wherein
each bus subscriber (S1, S2, S3, S4) comprises a logic circuit, in particular wherein data packets of the master module (M) and/or of the bus subscribers (S1, S2, S3, S4) can be evaluated by means of the logic circuit,
and/or wherein
each bus subscriber (S1, S2, S3, S4) comprises an electronic circuit, wherein the electronic circuit comprises the switch and/or the time-measuring means and/or the logic circuit, in particular wherein the switch and/or the time-measuring means and/or the logic circuit are integrated in the electronic circuit.

## Revendications

1. Procédé d'attribution d'adresses à des participants au bus d'un système de bus présentant un module maître (M) et des participants au bus (S1, S2, S3, S4) disposés en série,
dans lequel le module maître (M) et les participants au bus (S1, S2, S3, S4) sont disposés en série et reliés entre eux,
dans lequel le procédé présente les étapes de procédé successives suivantes :
dans lequel, dans une première étape de procédé, le module maître (M) attribue une première adresse à un premier participant au bus (S1) disposé en aval du module maître (M) et envoie cette première adresse au premier participant au bus (S1), dans lequel la première adresse est en particulier un nombre naturel n, dans lequel la première adresse est en particulier 0 ou 1,
dans lequel, dans une deuxième étape de procédé, le premier participant au bus (S1) incrémente la première adresse de un, l'attribue comme deuxième adresse à un deuxième participant au bus (S2) disposé en aval du premier participant au bus (S1) et
envoie cette deuxième adresse au deuxième participant au bus (S2), dans lequel la deuxième adresse est en particulier le nombre naturel (n+1),
dans lequel, dans une troisième étape de procédé, le deuxième participant au bus (S2) s'enregistre auprès du module maître (M) avec sa deuxième adresse, et
**caractérisé en ce**
**qu'**un participant au bus (S1, S2, S3, S4) qui reçoit une adresse qui est supérieure à un nombre maximal autorisé de participants au bus (S1, S2, S3, S4) n'incrémente plus cette adresse, mais transmet la même adresse au participant au bus (S1, S2, S3 S4) disposé à son aval, qui s'enregistre auprès du module maître (M) avec cette adresse, et le module maître (M) envoie un message d'erreur à une commande de niveau supérieur au module maître (M) dès que le module maître (M) reçoit une adresse qui est supérieure au nombre maximal autorisé de participants au bus (S1, S2, S3, S4).

2. Procédé selon la revendication 1,
dans lequel, dans une quatrième étape de procédé, le deuxième participant au bus (S2) incrémente la deuxième adresse de un, l'attribue comme troisième adresse à un troisième participant au bus (S3) disposé en aval du deuxième participant au bus (S2) et envoie cette troisième adresse au troisième participant au bus (S3), dans lequel la troisième adresse est en particulier le nombre naturel (n+2),
dans lequel, dans une cinquième étape de procédé, le troisième participant au bus (S3) s'enregistre auprès du module maître (M) avec sa troisième adresse.

3. Procédé selon au moins l'une des revendications précédentes, dans lequel une validation est délivrée et/ou révoquée par une commande de niveau supérieur au module maître (M).

4. Système de bus présentant un module maître (M) et des participants au bus (S1, S2, S3, S4), dans lequel des adresses peuvent être attribuées aux participants au bus au moyen d'un procédé selon au moins l'une des revendications 1 à 3,
dans lequel le module maître (M) et les participants au bus (S1, S2, S3, S4) sont disposés en série,
dans lequel le module maître (M) et les participants au bus (S1, S2, S3, S4) sont reliés entre eux au moyen d'au moins une ligne de données (1, 2).

5. Système de bus selon la revendication 4,
dans lequel le système de bus présente au moins une première ligne de données (1) et une deuxième ligne de données (2).

6. Système de bus selon la revendication 5,
dans lequel un paquet de données (3) peut être envoyé aux participants au bus (S1, S2, S3, S4) par le module maître (M) au moyen de la première ligne de données (1),
et/ou dans lequel
un paquet de données respectif (3) peut être envoyé au module maître (M) par un participant au bus respectif (S1, S2, S3, S4) au moyen de la deuxième ligne de données (2).

7. Système de bus selon au moins l'une des revendications 5 à 6,
dans lequel la ligne de données respective (1, 2) présente au moins un câble de données respectif, dans lequel chaque participant au bus (S1, S2, S3, S4) est relié au moyen d'un câble de données respectif au participant au bus (S1, S2, S3, S4) disposé à son amont ou son aval ou au module maître (M),
en particulier dans lequel chaque câble de données présente deux parties de connecteur complémentaires et dans lequel chaque participant au bus (S1, S2, S3, S4) présente une première partie de connecteur pour la liaison au participant au bus disposé en amont respectif au moyen d'un câble de données respectif et dans lequel chaque participant au bus (S1, S2, S3, S4) présente une deuxième partie de connecteur pour la liaison au participant au bus disposé en aval respectif.

8. Système de bus selon la revendication 7,
dans lequel le câble de données respectif de la première ligne de données (1) et le câble de données respectif de la deuxième ligne de données (2) sont disposés entre deux participants au bus voisins (S1, S2, S3, S4) dans une gaine de câbles, en particulier dans lequel la gaine de câbles entoure, en particulier enveloppe, les câbles de données dans la direction circonférentielle,
en particulier dans lequel une ligne d'alimentation et/ou une ligne de masse pour les participants au bus (S1, S2, S3, S4) est disposée dans la gaine de câbles.

9. Système de bus selon au moins l'une des revendications 5 à 8,
dans lequel chaque participant au bus (S1, S2, S3, S4) présente un commutateur,
dans lequel le commutateur est relié à une ligne de données respective (1, 2),
dans lequel le commutateur est conçu pour interrompre la transmission de données le long de la ligne de données respective (1, 2),
et/ou dans lequel
chaque participant au bus (S1, S2, S3, S4) présente un moyen de mesure du temps, et/ou dans lequel
chaque participant au bus (S1, S2, S3, S4) présente un circuit logique, en particulier dans lequel des paquets de données du module maître (M) et/ou des participants au bus (S1, S2, S3, S4) peuvent être évalués au moyen du circuit logique,
et/ou dans lequel
chaque participant au bus (S1, S2, S3, S4) présente un circuit électronique, dans lequel le circuit électronique présente le commutateur et/ou le moyen de mesure du temps et/ou le circuit logique, en particulier dans lequel le commutateur et/ou le moyen de mesure du temps et/ou le circuit logique sont intégrés dans le circuit électronique.
